# FASCICULE DE BREVET EUROPEEN

(11) **EP 2 134 590 B1**
(45) Date de publication et mention de la délivrance du brevet: **18.08.2010**
(21) Numéro de dépôt: 08775686.2
(22) Date de dépôt: 06.03.2008
(51) Int. Cl.: B62D 65/10, F16H 61/36

(54) **PROCEDE DE MONTAGE D'UNE COMMANDE DE BOITE DE VITESSES EN POSITION HAUTE POUR VEHICULE, ET DISPOSITIF POUR LA MISE EN UVRE D'UN TEL PROCEDE**
VERFAHREN ZUR MONTAGE EINER HOCH POSITIONIERTEN GETRIEBESTEUERUNG FÜR EIN FAHRZEUG UND VORRICHTUNG ZUR AUSFÜHRUNG DIESES VERFAHRENS
METHOD FOR MOUNTING A HIGH POSITION GEARBOX CONTROL FOR A VEHICLE, AND DEVICE FOR IMPLEMENTING SAID METHOD

(30) Priorité: 19.03.2007 FR 0753911
(43) Date de publication de la demande: 23.12.2009
(73) Titulaire: Peugeot Citroën Automobiles SA, 78140 Vélizy-Villacoublay (FR)
(72) Inventeur: LEFEVRE, Eric, F-95230 Soisy sous Montmorency (FR); SOUMAT, David, F-91240 Villebon Sur Yvette (FR)
(86) Numéro de dépôt international: PCT/FR2008/050383
(87) Numéro de publication internationale: WO 2008/125781

(56) Documents cités:
- EP-A1- 0 575 861
- DE-A1- 3 829 559
- DE-A1- 10 158 981

## Description

La présente invention concerne un procédé de montage d'une commande de boîte de vitesses en position haute pour véhicule, en particulier pour véhicule automobile. Dans le présent texte, on appelle « commande de boîte de vitesses en position haute » une commande de boîte de vitesses avec un levier de vitesses fixé au tableau de bord. La présente invention concerne également un dispositif pour la mise en oeuvre d'un tel procédé.

En fabrication automobile, de façon conventionnelle, on prépare à part de la ligne de montage, sur un poste désigné « Poste Organe Mécanique » ou « POM », l'ensemble constitué par le moteur thermique, sa ligne d'échappement et la boîte de vitesses fixée au moteur thermique. Cet ensemble est ensuite transporté sur la ligne de montage, et il est « coiffé » par la carrosserie. A ce stade, un opérateur réalise le « câblage » de la boîte de vitesses, c'est-à-dire la connexion des câbles de la commande de boîte (en général, deux câbles), d'un côté à la boîte de vitesses elle-même et, de l'autre côté, au levier de vitesses.

On connaît par exemple, selon le document EP 0 575 861 B1, un système de commande de boîte de vitesses pour un véhicule, conforme au preambule de la revendication 1, ayant un volant de direction et un tableau de bord, du type comprenant un levier de commande séparé de la structure de support du volant de direction, et des moyens de transmission reliés fonctionnellement au levier de commande et à la boîte de vitesses, le levier de commande étant monté sur un support fixé au tableau de bord à côté du volant de direction et étant dirigé vers le haut, sensiblement parallèlement à l'axe du volant de direction. Le levier de commande est monté rotatif par rapport au support autour d'un premier axe d'articulation et d'un deuxième axe d'articulation, perpendiculaire audit premier axe. Un premier et un deuxième bras, sensiblement parallèles au premier axe d'articulation et au deuxième axe d'articulation, respectivement, sont fixés au levier pour commander l'engagement et la sélection des rapports par les moyens de transmission respectifs.

Qu'il s'agisse d'une commande de vitesse à levier de vitesses en position haute ou en position basse, les câbles de la commande relient un élément de l'ensemble préparé sur le poste « POM » à un élément de la carrosserie livré sur la ligne de montage principale, c'est-à-dire relient deux éléments qui sont préparés séparément et mis en place ensuite l'un par rapport à l'autre sur la ligne de montage principale.

Sur la ligne de montage principale, les câbles de la commande de vitesse, déjà connectés à la boîte de vitesses, arrivent par le dessous du véhicule pour que leur extrémité libre soit connectée au levier de vitesses, notamment au levier de vitesses fixé au tableau de bord. Les câbles passent à travers une ouverture ménagée dans la partie de carrosserie inférieure appelée généralement tunnel. En passant dans cette ouverture, il y a un risque d'accrochage et d'endommagement des câbles.

Le but de la présente invention est de fournir un procédé de montage d'une commande de boîte de vitesses en position haute pour véhicule, en particulier pour véhicule automobile, qui permette de préparer, avant l'opération de « coiffage » de la carrosserie sur la ligne de montage principale, tout l'ensemble de commande de vitesse avec les câbles de commande déjà connectés à la boîte de vitesses.

Un autre but de la présente invention est de fournir un dispositif mettant en oeuvre d'un tel procédé, qui permette, au moment du « coiffage » sur la ligne de montage principale, d'assurer le guidage des câbles et leur passage à travers une ouverture de la carrosserie sans risque d'accrochage des câbles.

C'est également un but de la présente invention de fournir un tel dispositif, qui soit de conception simple, de fabrication aisée, qui soit robuste, fiable et économique.

Pour parvenir à ces buts, la présente invention propose un nouveau procédé de montage d'une commande de boîte de vitesses en position haute pour véhicule, en particulier pour véhicule automobile, la commande comprenant des câbles de liaison fixés d'une part à la boîte de vitesses fixée au moteur et, d'autre part, au levier de vitesses fixé au tableau de bord, lequel procédé comporte les étapes suivantes :
- les câbles de liaison sont connectés à la boîte de vitesses sur un poste de montage séparé de la ligne de montage principale,
- l'ensemble mécanique, qui comprend la boîte de vitesses avec les câbles de liaison déjà connectés, est transporté dudit poste de montage sur la ligne de montage principale,
- l'ensemble mécanique est « coiffé » par la carrosserie, une ouverture étant prévue dans la carrosserie pour le passage des câbles de liaison et un dispositif de guidage étant prévu sur l'ensemble mécanique pour guider lesdits câbles au travers de l'ouverture, de manière à éviter tout accrochage des câbles de liaison,
- l'ensemble mécanique est fixé à la carrosserie, et
- les extrémités libres des câbles de liaison sont récupérées par l'opérateur de montage à l'intérieur de l'habitacle, afin de les connecter au levier de vitesses.

Selon le procédé de l'invention, pour obtenir une bonne étanchéité, en particulier une bonne étanchéité aux projections par le dessous de la carrosserie, l'étape de fixation de l'ensemble mécanique à la carrosserie sur la ligne de montage principale comprend une opération de mise en place d'un élément de fermeture et d'étanchéité de l'ouverture de la carrosserie.

Selon un mode préféré de réalisation de l'invention, le dispositif de guidage est mis en position sur une partie d'écran thermique liée à l'ensemble mécanique, et l'ouverture de la carrosserie est une ouverture aménagée dans le tunnel de la carrosserie.

Selon un mode préféré de réalisation de l'invention également, l'opération de mise en place d'un élément de fermeture et d'étanchéité dans l'ouverture de la carrosserie comprend les phases suivantes :
- mise en place de la partie inférieure d'une plaque de fermeture à joint d'étanchéité, traversée par les câbles de liaison,
- retrait du dispositif de guidage,
- passage des câbles de liaison à travers la partie supérieure de la plaque de fermeture à joint d'étanchéité, et
- mise en place de ladite partie supérieure de la plaque de fermeture à joint d'étanchéité, et fixation de la plaque par l'intérieur de l'habitacle.

La présente invention concerne également un dispositif mettant en oeuvre du procédé exposé ci-dessus dans ses grandes lignes. Ce dispositif présente la forme d'un boîtier de protection, sensiblement vertical, ouvert à ses extrémités inférieure et supérieure, l'ouverture supérieure étant de section inférieure à la section de l'ouverture inférieure de façon à guider les câbles de liaison placés à l'intérieur du boîtier de protection de l'ouverture inférieure vers l'ouverture supérieure.

Ce dispositif présente, de préférence, à sa partie inférieure, des pattes longitudinales de positionnement destinées à positionner le dispositif sur une partie d'écran thermique.

De préférence également, ce dispositif comporte, dans sa paroi latérale, une pluralité d'orifices pour le passage individuel des câbles de liaison de la commande de vitesse, de manière à rendre ces derniers individuellement accessibles à un opérateur de montage.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue en perspective, schématique, du passage de la commande de vitesse dans une ouverture du tunnel de la carrosserie d'un véhicule,
- les figures 2A et 2B sont des vues de dessus et de dessous, respectivement, en perspectives, schématiques, de la partie inférieure de la plaque de fermeture de l'ouverture de passage des câbles de la commande de vitesse aménagée dans le tunnel de la carrosserie d'un véhicule,
- les figures 3A et 3B sont des vues en coupe longitudinale et transversale, respectivement, de la plaque de fermeture avec son joint d'étanchéité,
- la figure 4 illustre, de manière schématique, le principe d'utilisation du dispositif de guidage, selon la présente invention,
- les figures 5, 6, 7 et 8 illustrent, de manière schématique, la première, la deuxième, la troisième et la quatrième étape, respectivement, du procédé de montage de commande de boîte de vitesses en position haute, selon la présente invention.

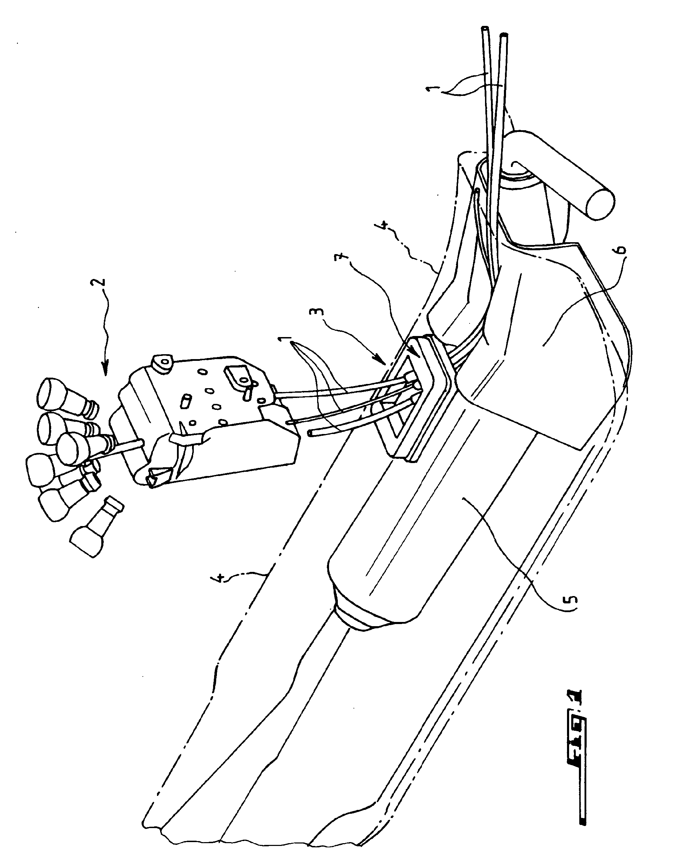

En référence au dessin de la figure 1, on a représenté, de manière schématique, les liaisons d'une commande de boîte de vitesses dans un véhicule à levier de vitesses en position haute, c'est-à-dire à hauteur du tableau de bord.

Les câbles de liaison 1 relient la boîte de vitesses non représentée au levier de vitesses de référence générale 2. Les câbles de liaison 1 passent au travers d'une ouverture 3 aménagée dans le tunnel 4 de la carrosserie. Le tunnel 4 est, de manière conventionnelle, la partie de carrosserie qui laisse le passage de la ligne d'échappement illustrée par la référence 5. La référence 6 désigne une partie d'écran thermique. Les câbles 1 traversent l'ouverture 3 par l'intermédiaire d'une plaque de fermeture, de référence générale 7, qui présente aussi une fonction d'étanchéité.

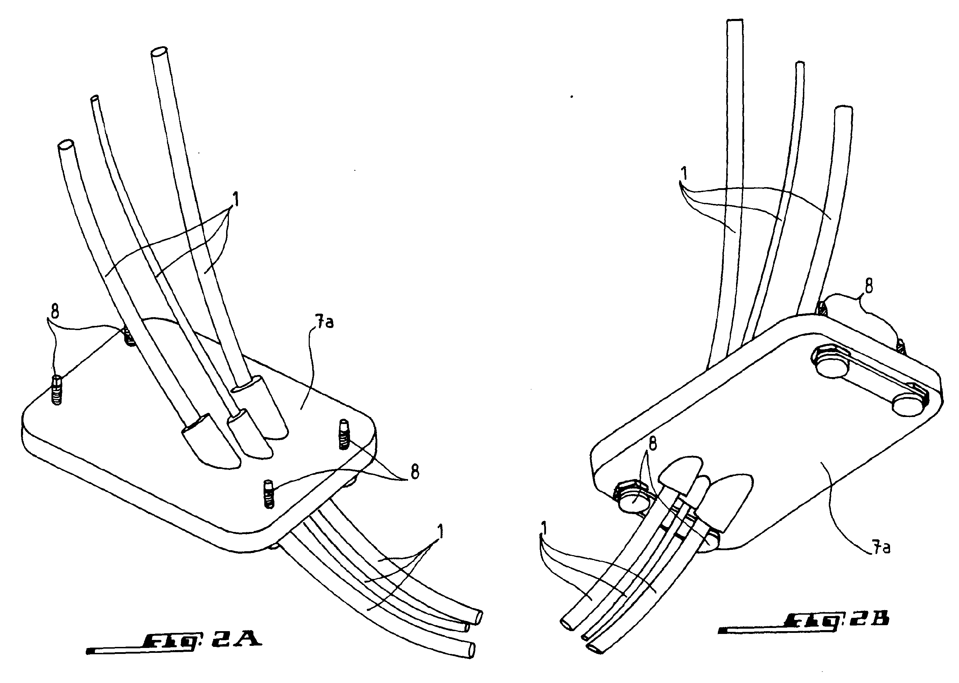

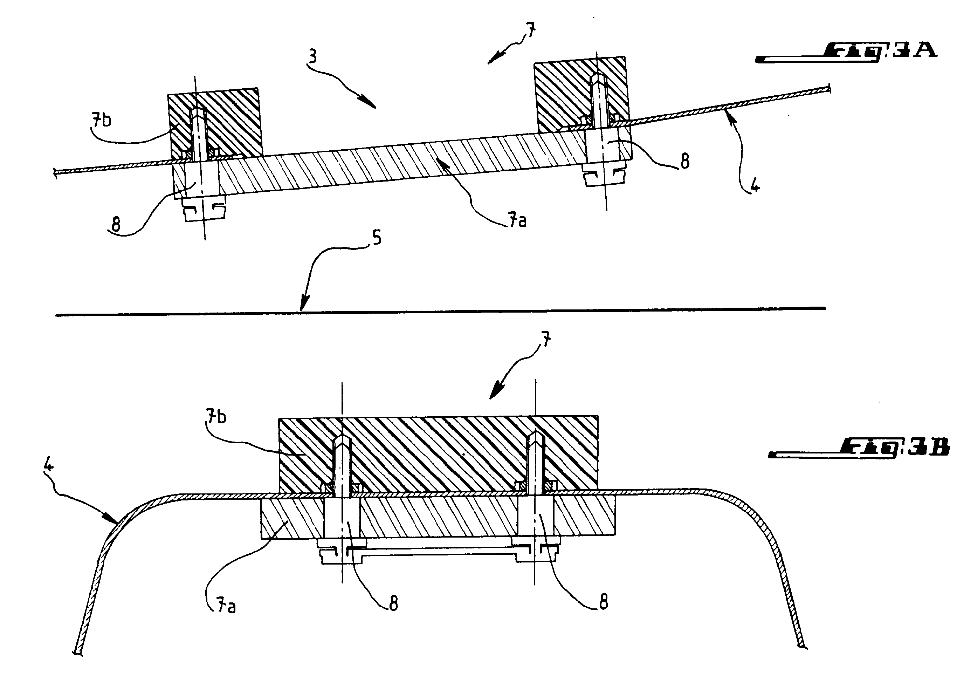

Le passage des câbles de liaison 1 à travers la partie inférieure 7a de la plaque de fermeture 7 est représenté avec plus de détails sur les figures 2A et 2B, en vue de dessus et en vue de dessous, respectivement. Des vis 8 permettent la fixation de la partie inférieure 7a de plaque de fermeture 7 sur le tunnel 4 et la fixation de la partie supérieure 7b (fig. 3A et 3B).

Les figures 3A et 3B représentent, en coupe longitudinale et transversale, respectivement, la partie de plaque de fermeture 7a revêtue du joint d'étanchéité ou partie supérieure 7b. Le joint d'étanchéité 7b est plaqué autour de l'ouverture 3 sur la paroi du tunnel 4, monté sur la partie inférieure 7a par l'intermédiaire des vis 8, la paroi du tunnel 4 étant alors prise en « sandwich » entre les deux parties de la plaque de fermeture 7.

Comme déjà mentionné précédemment, on prépare à part de la ligne de montage principale des véhicules, sur le « Poste Organe Mécanique », un ensemble d'organes mécaniques constitué essentiellement par le moteur thermique, sa ligne d'échappement et la boîte de vitesses fixée au moteur thermique. Cet ensemble d'organes mécaniques, monté à part, est aussi appelé « ensemble moteur » dans la suite du texte. Cet ensemble moteur, représenté essentiellement par une partie de l'échappement 5 sur la figure 1, est ensuite transporté sur la ligne de montage principale, et il est « coiffé » par la carrosserie représentée par le tunnel 4 de la figure 1. A la différence du procédé de montage de l'art antérieur, la connexion des câbles de liaison 1 avec la boîte de vitesses est réalisée sur le Poste Organe Mécanique. Par conséquent, sur la ligne de montage principale, la carrosserie vient « coiffer » l'ensemble moteur avec les câbles 1 qui lui sont déjà connectés et qui doivent encore être reliés au levier de vitesses 2. L'opération de « coiffage » présente des risques d'accrochage et d'endommagement des câbles de liaison 1 s'ils ne sont pas parfaitement positionnés.

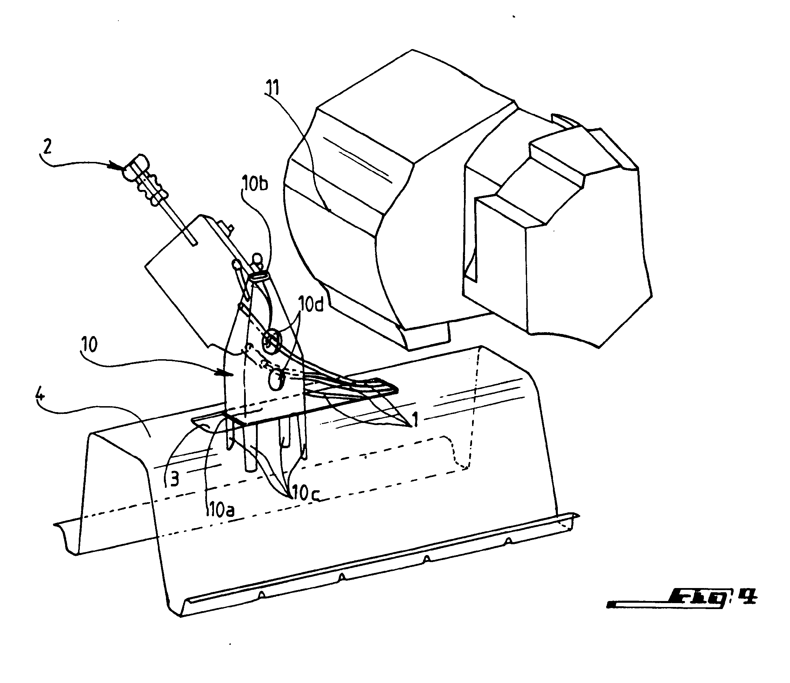

Comme représenté sur le dessin de la figure 4, afin de protéger le câbles de liaison 1 lors du « coiffage », ceux-ci sont insérés dans un dispositif de guidage, de référence générale 10, qui présente la forme générale d'un boîtier, sensiblement vertical, ouvert à son extrémités inférieure 10a pour l'entrée des câbles de liaison 1 dans le dispositif et ouvert également à son extrémité supérieure 10b pour la sortie des câbles de liaison 1. La section transversale du boîtier est décroissante dans sa partie supérieure, de façon à guider plus étroitement les câbles de liaison 1 placés à l'intérieur du boîtier de l'ouverture inférieure 10a vers l'ouverture supérieure 10b. La référence 11 de la figure 4 illustre un élément à hauteur du tableau de bord, comme le coffre de climatisation, par exemple.

Le dispositif de guidage présente, à sa partie inférieure, des pattes longitudinales 10c de positionnement, qui sont destinées à positionner le dispositif 10 sur l'ensemble moteur, par exemple sur une partie d'écran thermique, connue en soi, non représentée sur la figure 4.

Le dispositif comporte, dans sa paroi latérale, une pluralité d'orifices 10d pour le passage individuel des câbles de liaison 1, de manière à rendre ces derniers individuellement accessibles à un opérateur de montage.

Le procédé de montage de la commande de boîte de vitesses de véhicule en position haute, objet de la présente invention, comporte les étapes suivantes :
- le dispositif de guidage 10 est positionné sur luge en Poste Organe Mécanique, posé sur une partie d'écran thermique, et les câbles de liaison 1 sont reliés à la boîte de vitesses,
- l'ensemble moteur, à savoir l'ensemble constitué par le moteur thermique, son échappement et la boîte de vitesses à laquelle sont déjà connectés les câbles de liaison 1, est transporté sur la ligne de montage principale, et le procédé de montage sur la ligne principale comporte les étapes décrites ci-dessous.

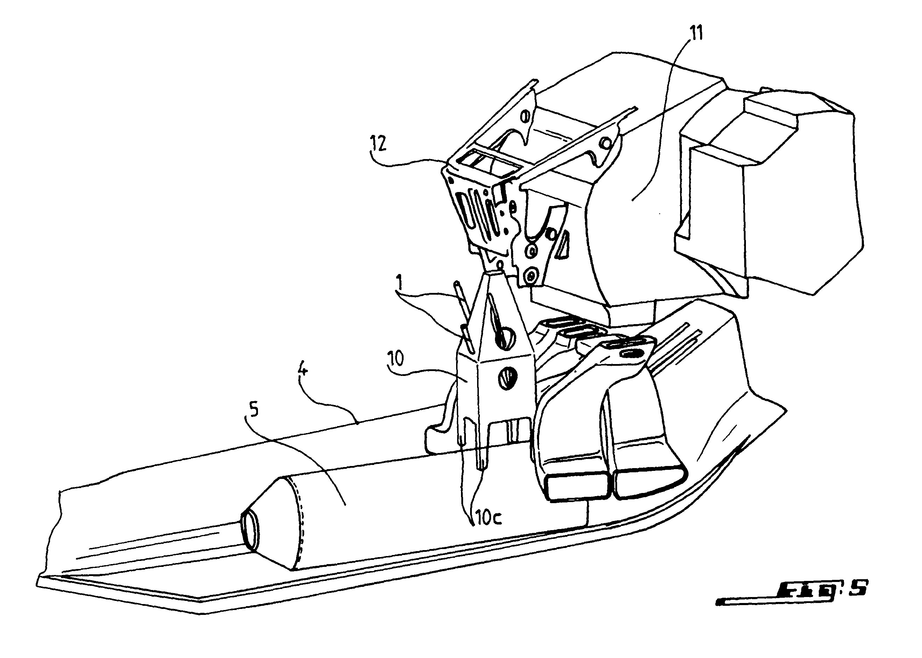

Selon une première étape, illustrée par le dessin de la figure 5, l'ensemble moteur est alors « coiffé » par la carrosserie représentée par le tunnel 4. Au cours de cette opération de « coiffage », qui consiste à faire descendre la carrosserie sur l'ensemble moteur, le dispositif de guidage 10 passe à travers l'ouverture 3 du tunnel 4 de la carrosserie, guidant ainsi les câbles de liaison 1 qu'il enferme dans le passage de l'ouverture 3 de tunnel 4, de façon à les rendre accessibles à un opérateur de montage sans risque d'accrochage et d'endommagement au passage de l'ouverture 3,

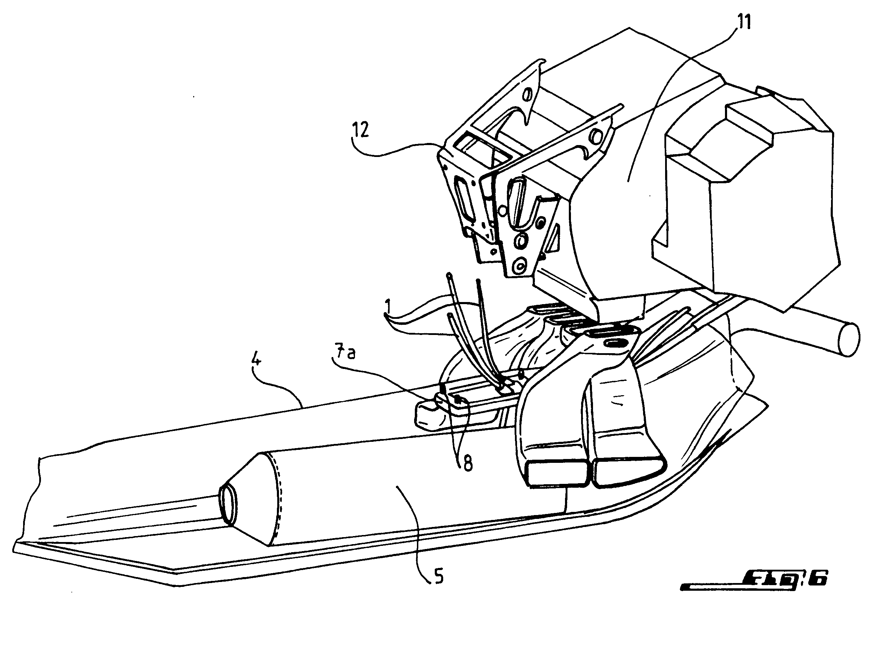

Selon une deuxième étape, illustrée par le dessin de la figure 6, l'opérateur de montage, à partir de l'habitacle, réalise les opérations suivantes :
- mise en place de la partie inférieure 7a (sous le tunnel 4) de la plaque de fermeture 7 à joint d'étanchéité, le positionnement de la partie inférieure 7a de la plaque de fermeture 7 étant réalisé grâce à un goujon, par exemple, à travers le tunnel 4,
- retrait du dispositif de guidage 10, et
- fixation de la partie inférieure 7a (sous le tunnel 4) de la plaque de fermeture 7 à joint d'étanchéité.

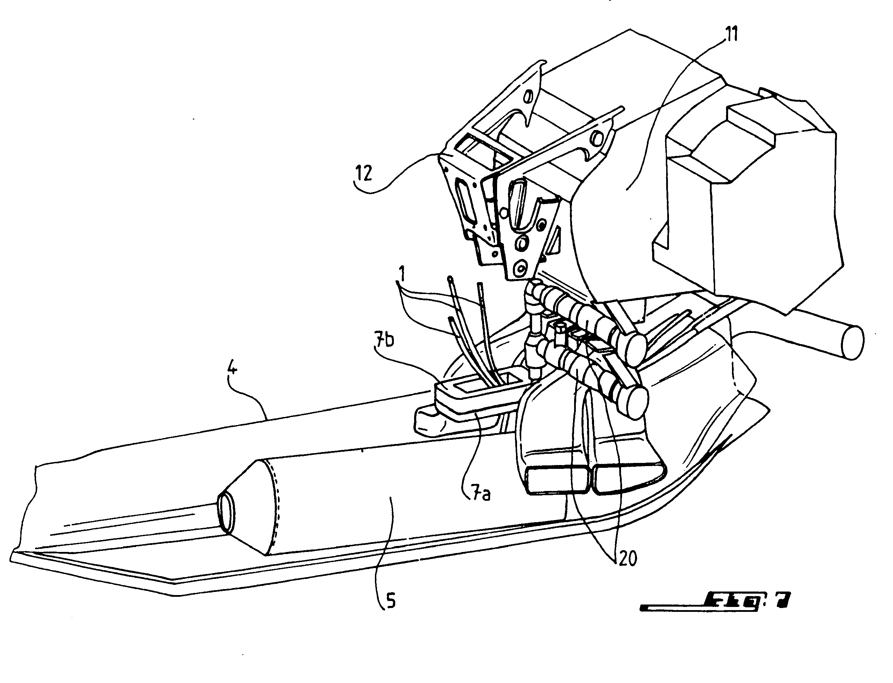

Selon une troisième étape, illustrée par le dessin de la figure 7, l'opérateur de montage, toujours à partir de l'habitacle, poursuit la mise en oeuvre du procédé par les opérations suivantes :
- mise en place de la partie supérieure 7b sur le tunnel 4 et la partie inférieure 7a de la plaque de fermeture 7,
- saisie des câbles de liaison 1,
- passage des câbles de liaison 1 dans la partie supérieure 7b de la plaque 7, et
- fixation de l'ensemble constitué par la plaque de fermeture 7 et les câbles de liaison 1 sur le tunnel 4 de la carrosserie. Un outil-robot 20, telle qu'une visseuse asservie, connu en soi, et par conséquent non décrit en détail, réalise les vissages de la plaque de fermeture 7 sur la carrosserie.

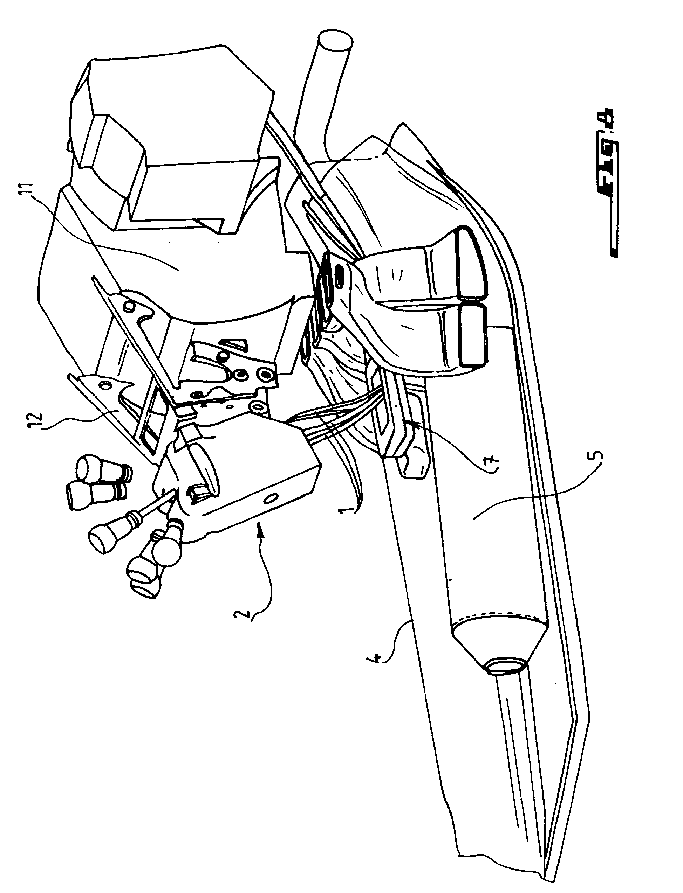

Enfin, selon une quatrième étape, illustrée par le dessin de la figure 8, l'opérateur de montage fixe la commande de levier de vitesses, de référence générale 2, en position haute, à hauteur du tableau de bord, sur une structure 12 liée au tableau de bord. L'opérateur peut alors réaliser la connexion des câbles de liaison 1 à la commande de levier de vitesses 2.

La présente invention présente l'avantage de supprimer des opérations de récupération des câbles de liaison avant connexion à la commande de levier de vitesses, et de supprimer les risques d'accrochage et d'endommagement de ces câbles.

De plus, l'invention fournit un procédé de montage automatique, fiable et économique.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Procédé de montage d'une commande de boîte de vitesses en position haute pour véhicule, en particulier pour véhicule automobile, la commande comprenant des câbles de liaison (1) connectés d'une part à la boîte de vitesses fixée au moteur et, d'autre part, au levier de vitesses (2) fixé au tableau de bord, **caractérisé en ce qu'**il comporte les étapes suivantes, prises en combinaison :
- les câbles de liaison (1) sont connectés à la boîte de vitesses sur un poste de montage séparé de la ligne de montage principale,
- l'ensemble mécanique qui comprend la boîte de vitesses avec les câbles de liaison (1) déjà connectés est transporté dudit poste de montage sur la ligne de montage principale,
- l'ensemble mécanique est « coiffé » par la carrosserie, une ouverture (3) étant prévue dans la carrosserie pour le passage des câbles de liaison (1) et un dispositif de guidage (10) étant prévu sur l'ensemble mécanique pour guider lesdits câbles de liaison (1) au travers de l'ouverture (3), de manière à éviter tout accrochage des câbles de liaison (1),
- l'ensemble mécanique est fixé à la carrosserie, et
- les extrémités libres des câbles de liaison (1) sont récupérées par l'intérieur de l'habitacle, afin de les connecter au levier de vitesses (2).

2. Procédé selon la revendication 1, **caractérisé en ce que** l'étape de fixation de l'ensemble mécanique à la carrosserie sur la ligne de montage principale comprend une opération de mise en place d'un élément de fermeture et d'étanchéité (7) de l'ouverture (3) de la carrosserie.

3. Procédé selon l'une quelconque des revendications 1 et 2, **caractérisé en ce que** le dispositif de guidage (10) est mis en position sur une partie d'écran thermique (6) liée à l'ensemble mécanique.

4. Procédé selon l'une quelconque des revendications 1 à 3, **caractérisé en ce que** l'ouverture (3) de la carrosserie est une ouverture aménagée dans le tunnel (4) de la carrosserie.

5. Procédé selon la revendication 2, **caractérisé en ce que** ladite opération de mise en place d'un élément de fermeture et d'étanchéité (7) de l'ouverture (3) de la carrosserie comprend les phases suivantes :
- mise en place de la partie inférieure (7a) d'une plaque de fermeture (7) à joint d'étanchéité, traversée par les câbles de liaison (1),
- retrait du dispositif de guidage (10),
- passage des câbles de liaison (1) à travers la partie supérieure (7b) de la plaque de fermeture (7) à joint d'étanchéité, et
- mise en place de ladite partie supérieure (7b) de la plaque de fermeture (7) à joint d'étanchéité et fixation de la plaque par l'intérieur de l'habitacle.

6. Dispositif de guidage mettant en oeuvre le procédé de montage conforme à l'une quelconque des revendications 1 à 5, **caractérisé en ce qu'**il présente la forme d'un boîtier de protection (10), sensiblement vertical, ouvert à ses extrémités inférieure (10a) et supérieure (10b), l'ouverture supérieure (10b) étant de section inférieure à la section de l'ouverture inférieure (10a) de façon à guider les câbles de liaison (1) placés à l'intérieur du boîtier de protection (10) de l'ouverture inférieure (10a) vers l'ouverture supérieure (10b), et présentant à sa partie inférieure, des pattes longitudinales de positionnement (10c) destinées à positionner le dispositif (10) sur une partie d'écran thermique (6).

7. Dispositif selon l'une quelconque des revendications 6, **caractérisé en ce qu'**il comporte, dans sa paroi latérale, une pluralité d'orifices (10d) pour le passage individuel des câbles de liaison (1) de la commande de vitesse, de manière à rendre ces derniers individuellement accessibles à un opérateur de montage.

## Claims

1. Method for mounting a high position gearbox control for a vehicle, in particular for an automobile vehicle, the control comprising linking cables (1) connected on the one hand to the gear box fixed to the engine and, on the other hand, to the gear lever (2) fixed to the control panel, **characterized in that** it comprises the following stages, taken in combination:
- the linking cables (1) are connected to the gearbox at an assembly position separate from the main assembly line,
- the mechanical unit which comprises the gearbox with the linking cables (1) already connected is transported from the said assembly position onto the main assembly line,
- the mechanical unit is then "covered" by the bodywork, an opening (3) being provided in the bodywork for the passage of the linking cables (1) and a guiding device (10) being provided on the mechanical unit to guide the said linking cables (1) through the opening (3), so as to avoid any catching of the linking cables (1),
- the mechanical unit is fixed to the bodywork, and
- the free ends of the linking cables (1) are recovered from the interior of the passenger compartment, so as to connect them to the gear lever (2).

2. Method according to Claim 1, **characterized in that** the fixing stage of the mechanical unit to the bodywork on the main assembly line comprises an operation for putting in place a closing and sealing element (7) of the opening (3) of the bodywork.

3. Method according to any one of Claims 1 and 2, **characterized in that** the guiding device (10) is put in position on a thermal screen part (6) linked to the mechanical unit.

4. Method according to any one of Claims 1 to 3, **characterized in that** the opening (3) of the bodywork is an opening arranged in the tunnel (4) of the bodywork.

5. Method according to Claim 2, **characterized in that** the said operation of putting in place a closing and sealing element (7) of the opening (3) of the bodywork comprises the following phases:
- putting in place the lower part (7a) of a closure plate (7) with tightness joint, passed through by the linking cables (1),
- withdrawal of the guiding device (10),
- passage of the linking cables (1) through the upper part (7b) of the closure plate (7) with tightness joint, and
- putting in place the said upper part (7b) of the closure plate (7) with tightness joint, and fixing of the plate from the interior of the passenger compartment.

6. Guiding device, implementing the mounting method according to any one of Claims 1 to 5, **characterized in that** it presents the form of a protective box (10), substantially vertical, open at its lower (10a) and upper (10b) ends, the upper opening (10b) being of a smaller section than the section of the lower opening (10a) so as to guide the linking cables (1) placed inside the protective box (10) from the lower opening (10a) towards the upper opening (10b), and presenting at its lower part longitudinal positioning tabs (10c) intended to position the device (10) on a thermal screen part (6).

7. Device according to Claim 6, **characterized in that** it comprises, in its lateral wall, a plurality of orifices (10d) for the individual passage of the linking cables (1) of the gear shift, so as to make these individually accessible to an assembly operator.

## Patentansprüche

1. Verfahren zur Montage einer Schaltgetriebesteuerung in Hochstellung für Fahrzeug, insbesondere für Kraftfahrzeug, wobei die Steuerung Verbindungskabel (1) aufweist, die einerseits an das Schaltgetriebe, das an dem Motors befestigt ist, angeschlossen sind, und, andererseits, an dem Schalthebel (2), der an dem Armaturenbrett befestigt ist, **dadurch gekennzeichnet, dass** es die folgenden Schritte kombiniert genommen aufweist:
- die Verbindungskabel (1) werden mit dem Schaltgetriebe auf einem separaten Montageposten der Hauptmontagelinie verbunden,
- die mechanische Einheit, die das Schaltgetriebe mit den bereits verbundenen Verbindungskabeln (1) aufweist, wird von dem Montageposten auf die Hauptmontagelinie transportiert,
- auf der mechanischen Einheit "sitzt" die Karosserie, wobei eine Öffnung (3) in der Karosserie für das Durchgehen der Verbindungskabel (1) vorgesehen ist, und wobei eine Führungsvorrichtung (10) auf der mechanischen Einheit vorgesehen ist, um die Verbindungskabel (1) durch die Öffnung (3) so durchzuführen, dass jedes Hängenbleiben der Verbindungskabel (1) vermieden wird,
- die mechanische Einheit wird an der Karosserie befestigt, und
- die freien Enden der Verbindungskabel (1) werden über das Innere der Fahrgastzelle aufgenommen, um sie mit dem Schalthebel (2) zu verbinden.

2. Verfahren nach Anspruch 1, **dadurch gekennzeichnet, dass** der Schritt des Befestigens der mechanischen Einheit an der Karosserie auf der Hauptmontagelinie einen Vorgang des Anbringens eines Verschluss- und Dichtelements (7) der Öffnung (3) der Karosserie umfasst.

3. Verfahren nach einem der Ansprüche 1 und 2, **dadurch gekennzeichnet, dass** die Führungsvorrichtung (10) auf einem Wärmeabschirmungsteil (6), der mit der mechanischen Einheit verbunden ist, in Position gebracht wird.

4. Verfahren nach einem der Ansprüche 1 bis 3, **dadurch gekennzeichnet, dass** die Öffnung (3) der Karosserie eine Öffnung ist, die in dem Tunnel (4) der Karosserie eingerichtet ist.

5. Verfahren nach Anspruch 2, **dadurch gekennzeichnet, dass** der Vorgang des Anbringens eines Verschluss- und Dichtelements (7) der Öffnung (3) der Karosserie die folgenden Phasen aufweist:
- Anbringen des unteren Teils (7a) einer Verschlussplatte (7) mit Dichtung, durchquert von den Verbindungskabeln (1),
- Herausziehen der Führungsvorrichtung (10),
- Durchführen der Verbindungskabel (1) durch den oberen Teil (7b) der Verschlussplatte (7) mit Dichtung, und
- Anbringen des oberen Teils (7b) der Verschlussplatte (7) mit Dichtung und Befestigen der Platte vom Inneren der Fahrgastzelle her.

6. Führungsvorrichtung, die das Montageverfahren gemäß einem der Ansprüche 1 bis 5 umsetzt, **dadurch gekennzeichnet, dass** sie die Form eines im Wesentlichen vertikalen Schutzgehäuses (10) hat, das an seinem unteren Ende (10a) und oberen Ende (10b) offen ist, wobei die obere Öffnung (10b) einen kleineren Querschnitt hat als die untere Öffnung (10a), so dass die Verbindungskabel (1), die in dem Inneren der Schutzgehäuses (10) platziert sind, von der unteren Öffnung (10a) zu der oberen Öffnung (10b) geführt werden, und die in ihrem unteren Teil Positionierungslängspratzen (10c) aufweist, die dazu bestimmt sind, die Vorrichtung (10) auf einem Wärmeabschirmungsteil (6) zu positionieren.

7. Vorrichtung nach Anspruch 6, **dadurch gekennzeichnet, dass** sie in ihrer Seitenwand mehrere Öffnungen (10d) für das einzelne Durchgehen der Verbindungskabel (1) der Schaltsteuerung derart aufweist, dass diese Letzteren einzeln für einen Montagebediener zugänglich sind.
